## Europäisches Patentamt
## European Patent Office
## Office européen des brevets

(19)

(11) Veröffentlichungsnummer : **0 141 188**
**B1**

(12) **EUROPÄISCHE PATENTSCHRIFT**

(45) Veröffentlichungstag der Patentschrift :
26.04.89

(51) Int. Cl.⁴ : **B 60 S   1/08**

(21) Anmeldenummer : **84110850.9**

(22) Anmeldetag : **12.09.84**

(54) **Wischanlage für vorwärts- und rückwärtsfahrende Fahrzeuge, insbesondere für Kraftfahrzeuge.**

(30) Priorität : 14.09.83 DE 3333044
03.03.84 DE 3407974

(43) Veröffentlichungstag der Anmeldung :
15.05.85 Patentblatt 85/20

(45) Bekanntmachung des Hinweises auf die Patenterteilung : 26.04.89 Patentblatt 89/17

(84) Benannte Vertragsstaaten :
BE DE FR GB IT SE

(56) Entgegenhaltungen :
DE--A-- 3 047 453
DE--B-- 2 411 128
PATENT ABSTRACTS OF JAPAN, Band 6, Nr. 207 (M-165)[1085], 19. Oktober 1982

(73) Patentinhaber : Kabelwerke Reinshagen GmbH
Reinshagenstrasse 1
D-5600 Wuppertal 21 (DE)

(72) Erfinder : Brinkschule, Ralf, Dipl.-Ing.
Boxbergstrasse 63
D-5600 Wuppertal 21 (DE)

(74) Vertreter : Priebisch, Rüdiger, Dipl.-Ing., Dipl.-Wirt-sch.-Ing. (FH)
Kabelwerke Reinshagen GmbH Patentabteilung
Reinshagenstrasse 1
D-5600 Wuppertal 21 (DE)

**Beschreibung**

Die Erfindung betrifft eine Wischanlage für vorwärts- und rückwärtsfahrende Fahrzeuge, insbesondere für Kraftfahrzeuge, nach dem Oberbegriff des Patentanspruches 1.

Aus der DE-AS 24 11 128, die dem Oberbegriff zugrundeliegt, ist es schon bekannt, die Wischfrequenz der Heckwischanlage in Abhängigkeit von der Wischfrequenz der Frontwischanlage zu schalten, wobei lt. Aufgabenstellung allerdings die Heckwischanlage nicht dauernd, sondern nur in bestimmten Intervallen mitgesteuert wird. Ausdrücklich ist dort angeführt, daß für die Heckscheibenwischanlage kein Dauerbetrieb erforderlich ist. Dieser ältere Vorschlag berücksichtigt jedoch nicht die besonderen Gegebenheiten bei einer Rückwärtsfahrt, insbesondere im strömenden Regen oder bei starkem Schneefall : Dann reicht keinesfalls der vorgeschlagene Intervallbetrieb der Heckwischanlage aus, um dem Fahrer eine einwandfreie Sicht nach hinten zu ermöglichen.

Der Erfindung liegt die Aufgabe zugrunde, die Funktionstüchtigkeit der Heckwischanlage sowohl bei unterschiedlichen Witterungseinflüssen als auch bei Rückwärtsfahrt zu verbessern.

Hierzu schlägt die Erfindung eine Wischanlage mit den Merkmalen des Patentanspruches 1 vor.

Vorteilhafte Ausgestaltungen der Erfindung sind in den Unteransprüchen gekennzeichnet.

Die Schaltungsanordnung gemäß der Erfindung berücksichtigt beide für die Benetzung bzw. Verschmutzung der beiden Scheiben maßgeblichen Einflußgrößen : Bei Vorwärtsfahrt verschmutzt die Frontscheibe stärker als die Heckscheibe, bei Rückwärtsfahrt ist es jedoch umgekehrt. Hat die Frontwischanlage zum Beispiel Intervallstufen I und Dauerbetriebsstufen $DI_f$, $DII_f$ usw und die Heckwischanlage Intervallstufen $I_{h1}$, $I_{h2}$, $I_{h3}$ usw und eine oder mehrere Dauerbetriebsstufen $D_H$, so können sich zum Beispiel folgende Beziehungen ergeben (bei den Beziehungen der Frequenzen $I_{h1} < I_{h2} < I_{h3}$ und $D_{II,h} < D_{III,h} < D_{IIII,h}$ usw.)

Vorwärtsfahrt

| Frontwischer | Heckwischer |
| --- | --- |
| | a) |
| 0 | $I_{h1}$ |
| $I_f$ | $I_{h2}$ |
| $DI_f$ | $I_{h3}$ |
| $DII_f$ | $I_{h3}$ |

Rückwärtsfahrt

| Frontwischer | Heckwischer | | | |
| --- | --- | --- | --- | --- |
| | a) | b) | c) | d) |
| 0 | $D_H$ | $D_{H1}$ | $D_{H1}$ | $D_{H1}$ |
| $I_f$ | $D_H$ | $D_{H1}$ | $D_{H2}$ | $D_{H2}$ |
| $DI_f$ | $D_H$ | $D_{H2}$ | $D_{H3}$ | $D_{H3}$ |
| $DII_f$ | $D_H$ | $D_{H2}$ | $D_{H3}$ | $D_{H4}$ |

Die Erfindung wird also darin gesehen, daß die im Fahrzeug für die Front- und Heckwischanlage jeweils vorhandenen Wischfrequenzen optimal ausgenutzt werden, je nach dem, wie die Wischfrequenz der Frontwischanlage eingestellt ist und wie die Fahrtrichtung gerade ist. Die aufgeführten Möglichkeiten, zum Beispiel a, b, c und d, sind nur als Beispiele aufzufassen. Es liegt im Rahmen des Fachkönnens, weitere Frequenzstufen, mit Dauer- oder Intervallbetrieb, oder auch stufenlose Frequenzbereiche für die Front- oder Heckwischanlage vorzusehen.

Die Abhängigkeit der Wischfrequenz der Heckwischanlage von der Wischfrequenz der Frontwischanlage erspart dem Fahrer eine Anpassung der Wischfrequenz der Heckwischanlage. Schon mit der Einstellung der Wischfrequenz der Frontwischanlage ist die optimale Wischfrequenz der Heckwischanlage eingestellt. Selbstverständlich müssen die Wischfrequenzen der beiden Wischanlagen bei einem bestimmten Fahrzeugaufbau aufeinander abgestimmt werden ; denn es ist bekannt, daß je nach Gestaltung des Fahrzeugaufbaus (Neigung der Scheiben, Luftführung) die Scheiben, insbesondere die Heckscheibe, mehr oder weniger schnell verschmutzen. Ändert der Fahrer die Fahrtrichtung, so erspart die Erfindung ihm ein Umschalten der Wischfrequenz der Heckwischanlage : Durch die selbsttätige Erhöhung der Wischfrequenz der Heckwischanlage hat der Fahrer eine unbehinderte, sichere Sicht nach hinten, das heißt in die augenblickliche Fahrtrichtung.

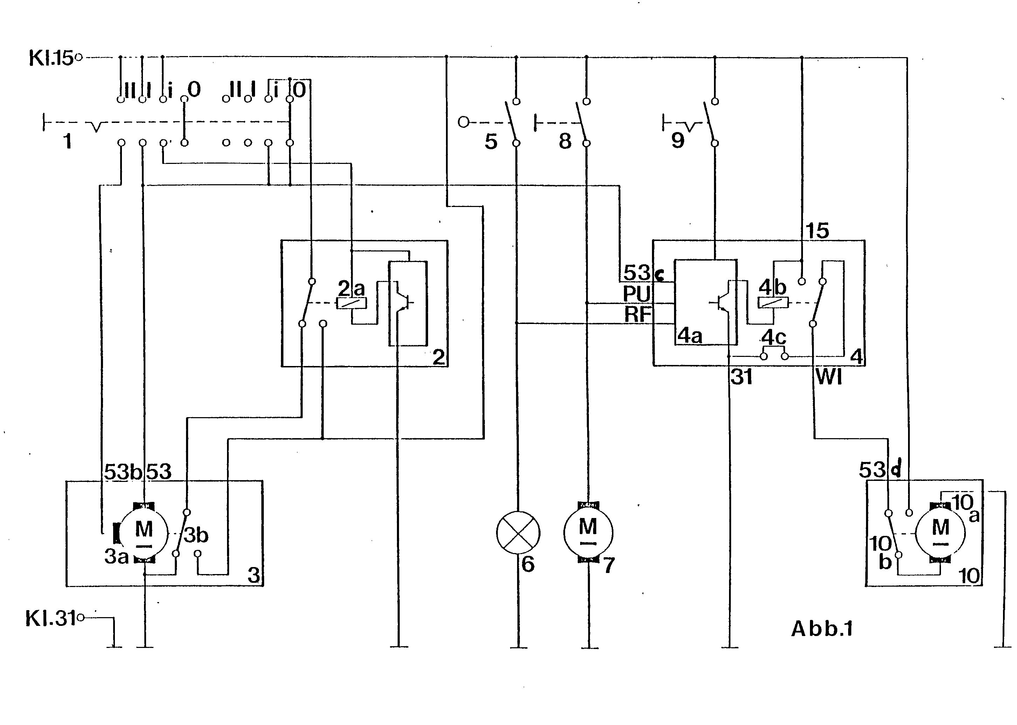

Die Erfindung wird durch eine Ausführungsbeispiel (siehe Beispiel a) oben) näher erläutert. Der Stromlaufplan in Abb. 1 stellt eine übliche Verschaltung einer Frontwischeranlage und beispielhaft die Verschaltung eines Heckwischer Intervall-Moduls in Pkw's dar. Der Plus-Pol der Batterie ist mit Kl. 15 und der Minus-Pol der Batterie mit Kl. 31 bezeichnet.

Der Frontwischer-Schalter 1, das Frontwischer-Intervall-Modul 2 und die Frontwischanlage 3 stellen in sich eine Funktions-Einheit dar. Die Wicklung für die Betriebsstufe I (Drehzahl $n_1$) des Motors 3 a ist in dessen Parkstellung über den Schalter 1 (Stellung o und i), über den Ruhekontakt des Relais 2 a des Frontwischer-Intervall-Moduls 2 und über den Parkstellungsschalter 3 b kurzgeschlossen. In der Betriebsstufe I (Drehzahl $n_1$) wird der Motor 3 a über die Klemme 53 versorgt. In der Betriebsstufe II (Drehzahl $n_2 > n_1$) wird der Motor 3 a über die Klemme 53 b versorgt. Von der Klemme 53 der Frontwischanlage 3 besteht eine Verbindung zur Klemme 53 c des Heckwischer-Intervall-Moduls 4.

Mit dem Getriebeschalter 5, der bei eingelegtem Rückwärtsgang geschlossen ist, wird der Rückfahrscheinwerfer 6 geschaltet. Das Heckwischer-Intervall-Modul 4 ist über die Klemme RF mit dem Rückfahrscheinwerfer 6 verbunden.

Die Heckscheiben-Waschanlage 7 wird durch Schließen des Schalters 8 in Betrieb genommen. Die Heckscheiben-Waschanlage 7 ist über die Klemme PU mit dem Heckwischer-Intervall-Modul 4 verbunden.

Durch Schließen des Schalters 9 wird das Heckwischer-Intervall-Modul 4 in Betrieb genommen. Die elektronische Schaltung 4 a des Heckwischer-Intervall-Moduls 4 besteht im wesentlichen aus einem Frontwischer-Intervall-Indikator, einem Taktgeber, einer Ausschaltverzögerung für den Wisch-Wasch-Betrieb und einer Treiberstufe zum Schalten des Relais 4 b. Das Heckwischer-Intervall-Modul 4 ist über seine Klemme WI mit der Klemme 53 d der Heckscheiben-Wischanlage 10 verbunden.

Im folgenden wird der Betrieb der Heckscheiben-Wischanlage 10 im Zusammenhang mit dem Heckwischer-Intervall-Modul 4 anhand des Stromlaufplanes (siehe Abb. 1) beschrieben. Die Aktivierung des Heckwischer-Intervall-Moduls 4 erfolgt durch Schließen des Schalters 9 oder durch Schließen des Schalters 8.

Ist der Schalter 9 geschlossen, befindet sich der Schalter 1 in Stellung 0 und sind der Schalter 8 und der Getriebeschalter 5 geöffnet, wird die Heckscheiben-Wischanlage 10 durch das Heckwischer-Intervall-Modul 4 betrieben. Es handelt sich jetzt um Intervallbetrieb mit einer Pausenzeit von $t_1$ (z. B. $t_1 = 45$ s). Hierbei wird durch die Schaltung 4 a des Heckwischer-Intervall-Moduls 4 das Relais 4 b des Heckwischer-Intervall-Moduls 4 mit einer Frequenz von $1/t_1$ erregt.

Der Motor 10 a der Heckscheiben-Wischanlage wird jetzt über den Arbeitskontakt des Relais 4 b des Heckwischer-Intervall-Moduls 4 und über den Ruhekontakt des Parkstellungsschalters 10 b der Heckscheiben-Wischanlage 10 versorgt und läuft an. Der Motor 10 a der Heckscheiben-Wischanlage 10 stellt den Parkstellungsschalter 10 b der Heckscheiben-Wischanlage 10 in seine Arbeitsstellung. Das Relais 4 b des Heckwischer-Intervall-Moduls 4 schaltet wieder auf seinen Ruhekontakt. Nach einem Umlauf des Motors 10 a der Heckscheiben-Wischanlage 10 schaltet dieser den Parkstellungsschalter 10 b der Heckscheiben-Wischanlage 10 auf seinen Ruhekontakt. Soll der Motor 10 a der Heckscheiben-Wischanlage beim Erreichen seiner Parkstellung gebremst werden, wird seine Ankerwicklung über den Ruhekontakt des Parkstellungsschalters 10 b der Heckscheiben-Wischanlage 10, über den Ruhekontakt des Relais 4 b des Heckwischer-Intervall-Moduls 4 und die elektrische Verbindung 4 c des Heckwischer-Intervall-Moduls 4 kurzgeschlossen. Soll diese elektrische Bremsung des Motors 10 a der Heckscheiben-Wischanlage 10 nicht durchgeführt werden, entfällt die elektrische Verbindung 4 c des Heckwischer-Intervall-Moduls 4.

Wird nun der Schalter 1 in seine Stellung i gebracht, betreibt das Frontwischer-Intervall-Modul 2 die Frontwischanlage 3 in Intervallen. Das Heckwischer-Intervall-Modul 4 erhält über seinen Anschluß 53 c ein Signal, das der Häufigkeit des Betriebes der Frontwischanlage 3 entspricht. Die Schaltung 4 a des Heckwischer-Intervall-Moduls 4 wertet dieses Signal aus und betriebt die Heckscheiben-Wischanlage 10 in oben beschriebener Weise in Intervallen mit einer Pausenzeit von $t_2 < t_1$ (z. B. $t_2 = 30$ s).

Befindet sich der Schalter 1 in Stellung I, läuft der Motor 3 a der Frontwischanlage im Dauerbetrieb mit der Drehzahl $n_1$. Befindet sich der Schalter 1 in Stellung II läuft der Motor 3 a der Frontwischanlage im Dauerbetrieb mit der Drehzahl $n_2 > n_1$. In diesen beiden Betriebsarten erhält das Heckwischer-Intervall-Modul 4 über seinen Anschluß 53 c Steuersignale. Die Schaltung 4 a des Heckwischer-Intervall-Moduls 4 wertet diese Signale aus und betriebt die Heckscheiben-Wischanlage 10 in der oben beschriebenen Weise in Intervallen mit einer Pausenzeit von $t_3 < t_2$ (z. B. $t_3 = 15$ s).

Bei geschlossenem Schalter 9, geöffnetem oder geschlossenem Schalter 8 und einer beliebigen Stellung des Schalters 1 wird das Relais 4 b des Heckwischer-Interwall-Moduls 4 für die Dauer des Schliessens des Getriebeschalters 5 (Einschalten des Rückfahrscheinwerfers 6) erregt. Die Heckscheiben-Wischanlage 10 befindet sich im Dauerbetrieb.

Unabhängig von allen Schalterzuständen wird durch Inbetriebnahme der Heckscheiben-Waschanlage 7 (Schließen des Schalters 8) die Heckscheiben-Waschfunktion des Heckwischer-Intervall-Moduls 4 aktiviert. Während der Schalter 8 geschlossen ist, befindet sich die Heckscheiben-Waschanlage 7 im Dauerbetrieb und das Relais 4 b des Heckwischer-Intervall-Moduls 4 wird erregt. Nach Öffnen des Schalters 8 bleibt das Relais 4 b des Heckwischer-Intervall-Moduls 4 noch für eine Trockenwischzeit $t_0$ (z. B. $t_0 = 4$ s) erregt und die Heckscheiben-Wischanlage 10 befindet sich für die Zeit $t_0$ im Dauerbetrieb.

**Patentansprüche**

1. Wischanlage für vorwärts- und rückwärtsfahrende Fahrzeuge, insbesondere für Kraftfahrzeuge, mit einer Front- und einer Heckwischanlage (3, 10) zur Reinigung der Scheiben, mit mindestens je einem Schalter (1, 9) und mit mindestens zwei Wischfrequenzen pro Wischanlage, wobei bei gleichzeitigem Betrieb der beiden Wischanlagen die Wischfrequenz der Heckwischanlage (10) in Abhängigkeit von der Wischfrequenz der Frontwischanlage (3) durch eine Schaltungsanordnung (4, 5) gesteuert wird, die bei Vorwärtsfahrt des Fahrzeugs die Wischfrequenz der Heckwischanlage (10) niedriger steuert als die Wischfrequenz der Frontwischanlage (3), dadurch gekennzeichnet, daß die Schaltungsanordnung (4, 5) so ausgebildet ist, daß sie bei Rückwärtsfahrt des Fahrzeugs die Wischfrenquenz der Heckwischanlage (10) anhebt.

2. Wischanlage nach Anspruch 1, dadurch gekennzeichnet, daß die Schaltungsanordnung (4, 5) die Wischfrequenz der eingeschalteten Heckwischanlage (10) bei Rückwärtsfahrt auch dann anhebt, wenn die Frontwischanlage (3) außer Betrieb ist.

3. Wischanlage nach Anspruch 1 oder 2, dadurch gekennzeichnet, daß bei einem Fahrzeug mit einem Schalthebel (5) zur Schaltung der Fahrtrichtung eine elektrische oder elektronische Schaltung (4a) die Wischfrequenz der Heckwischanlage (10) steuert, während sie die Wischfrequenz der Frontwischanlage (3 über 53) und die Stellung des Schalthebels (5 über RF) abfragt.

4. Wischanlage nach Anspruch 3, dadurch gekennzeichnet, daß die elektrische oder elektronische Schaltung der Wischanlage auch eine Steuerung der Waschmittelpumpe (7) für die Heckwischanlage (10) umfaßt.

5. Wischanlage nach einem der Ansprüche 1 bis 4, dadurch gekennzeichnet, daß die Wischfrequenz der Frontwischanlage (3) in mindestens zwei Dauergeschwindigkeitsstufen (I, II) und mindestens einer Intervallstufe (i) gesteuert wird.

6. Wischanlage nach einem der Ansprüche 1 bis 5, dadurch gekennzeichnet, daß die Wischfrequenz der Heckwischanlage (10) in mindestens einer Dauergeschwindigkeitsstufe und in mindestens einer Intervallstufe gesteuert wird.

**Claims**

1. Wiping installation for vehicles travelling forwards and backwards, in particular for motor vehicles, with a front- and a rear wiping installation (3, 10) for cleaning the panes, with at least one switch (1, 9) in each case and with at least two wiping frequencies per wiping installation, wherein when both the wiping installations are in operation simultaneously, the wiping frequency of the rear wiping installation (10) is controlled in dependence upon the wiping frequency of the front wiping installation (3) by means of a circuit arrangement (4, 5) which, when the vehicle is travelling forwards, controls the wiping frequency of the rear wiping installation (10) so that it is lower than the wiping frequency of the front wiping installation (3), characterised in that the circuit arrangement (4, 5) is so constructed that when the vehicle is travelling backwards, it increases the wiping frequency of the rear wiping installation. (10).

2. Wiping installation according to claim 1, characterised in that the circuit arrangement (4, 5) increases the wiping frequency of the switched-on rear wiping installation (10) during backwards travel, even when the front wiping installation (3) is not in operation.

3. Wiping installation according to claim 1 or 2, characterised in that in a vehicle with a gear shift lever (5) for changing the direction of travel, an electric or electronic circuit (4a) controls the wiping frequency of the rear wiping installation (10), whilst it scans the wiping frequency of the front wiping installation (3 via 53) and the position of the gear shift lever (5 via RF).

4. Wiping installation according to claim 3, characterised in that the electric or electronic circuit of the wiping installation also comprises a control for the washing-agent pump (7) for the rear wiping installation (10).

5. Wiping installation according to one of the claims 1 to 4, characterised in that the wiping frequency of the front wiping installation (3) is controlled in at least two cruising speed stages (I, II) and at least one interval stage (i).

6. Wiping installation according to one of the claims 1 to 5, characterised in that the wiping frequency of the rear wiping installation (10) is controlled in at least one cruising speed stage and in at least one interval stage.

**Revendications**

1. Installation d'essuie-glace pour véhicules à marche avant et à marche arrière, notamment pour véhicules automobiles, comprenant un dispositif essuie-glace avant et un dispositif essuie-glace arrière (3, 10) en vue du nettoyage des vitres, au moins un interrupteur respectif (1, 9) et au moins deux fréquences de balayage par dispositif essuie-glace, installation dans laquelle, en cas de fonctionnement simultané des deux dispositifs essuie-glace, la fréquence de balayage du dispositif essuie-glace arrière (10) est commandée, en fonction de la fréquence de balayage du dispositif essuie-glace avant (3), par l'intermédiaire d'un branchement (4, 5) qui, en marche avant du véhicule, commande la féquence de balayage du dispositif essuie-glace arrière (10) de manière qu'elle soit inférieure à la fréquence de balayage du dispositif essuie-glace avant (3), caractérisée par le fait que le branchement (4, 5) est réalisé de telle sorte qu'il accroisse la fréquence de balayage du dispositif essuie-glace arrière (10) en marche arrière du véhicule.

2. Installation d'essuie-glace selon la revendication 1, caractérisée par le fait que le branchement (4, 5) augmente la fréquence de balayage du dispositif essuie-glace arrière enclenché (10), en marche arrière, également lorsque le dispositif essuie-glace avant (3) est hors fonction.

3. Installation d'essuie-glace selon la revendication 1 ou 2, caractérisée par le fait que, en présence d'un véhicule équipé d'un levier sélecteur (5) assurant le changement du sens de marche, un circuit électrique ou électronique (4a) commande la fréquence de balayage du dispositif essuie-glace arrière (10), tandis qu'il interroge la fréquence de balayage du dispositif essuie-glace avant (3 par l'intermédiaire de 53) et la position du levier sélecteur (5 par l'intermédiaire de RF).

4. Installation d'essuie-glace selon la revendication 3, caractérisée par le fait que le circuit électrique ou électronique de cette installation d'essuie-glace englobe également une commande de la pompe (7) à agent de lavage du dispositif essuie-glace arrière (10).

5. Installation d'essuie-glace selon l'une des revendications 1 à 4, caractérisée par le fait que la fréquence de balayage du dispositif essuie-glace avant (3) est commandée selon au moins deux échelons (I, II) de vitesse continue et au moins un échelon d'intermittence (i).

6. Installation d'essuie-glace selon l'une des revendications 1 à 5, caractérisée par le fait que la fréquence de balayage du dispositif essuie-glace arrière (10) est commandée selon au moins un échelon de vitesse continue et au moins un échelon d'intermittence.

EP 0 141 188 B1

Abb.1